# DEMANDE DE BREVET EUROPEEN

(11) **EP 2 574 599 A1**
(43) Date de publication de la demande: **03.04.2013**
(21) Numéro de dépôt: 11183413.1
(22) Date de dépôt: 30.09.2011
(51) Int. Cl.: C01C 1/00

(54) **Réservoir pour le stockage d'ammoniac par sorption**

(71) Demandeur: Inergy Automotive Systems Research (Société Anonyme), 1120 Bruxelles (BE)
(72) Inventeur: Dougnier, François, 3190 Boortmeerbeek (BE); van Schaftingen, Jules-Joseph, 1300 Wavre (BE); De Keyzer, Pierre, 1050 Bruxelles (BE)
(74) Mandataire: de la Bigne, Guillaume Michel Marie

(57) **Abrégé**

Réservoir pour le stockage d'ammoniac par sorption, ledit réservoir comprenant des alvéoles, de préférence en matière plastique, communiquant entre elles et avec au moins un orifice communiquant avec l'extérieur, ces alvéoles étant aptes à contenir un solide destiné à la sorption d'ammoniac.

## Description

L'invention concerne un réservoir pour le stockage d'ammoniac par sorption, de préférence par chimisorption sur un solide.

Les oxydes d'azote présents dans les gaz d'échappement des véhicules, notamment Diesel, peuvent être éliminés par la technique de réduction catalytique sélective (généralement appelée SCR ou «Sélective Catalytic Reduction»). Dans ce procédé, des doses d'ammoniac sont injectées dans la ligne d'échappement en amont d'un catalyseur sur lequel les réactions de réduction ont lieu. Actuellement, l'ammoniac est produit par décomposition thermique d'un précurseur, généralement une solution aqueuse d'urée. Des systèmes embarqués de stockage, distribution et dosage d'une solution d'urée normalisée (telle que celle commercialisée sous la dénomination Adblue®, solution eutectique à 32.5% d'urée dans l'eau) ont ainsi été mis sur le marché.

Une autre technologie consiste à stocker l'ammoniac par sorption sur un sel, le plus souvent un chlorure de métal alcalino-terreux. L'activation thermique permet alors de restituer l'ammoniac dans la phase de fonctionnement du véhicule. Une pression d'ammoniac est donc générée. Ainsi apparaît-il nécessaire de disposer d'un système visant à remplir les différentes fonctionnalités rattachées à cette technologie dans le cas d'une application sur véhicules. Les systèmes actuels, à l'état de prototypes, font appel à un réservoir de stockage cylindrique en acier inoxydable, avec un chauffage en périphérie.

La demande US 2010/0062296 propose un système de stockage d'ammoniac par chimisorption impliquant au moins deux réservoirs ou compartiments d'un même réservoir contenant des matériaux absorbants différents et ayant des tailles différentes, ces réservoirs/compartiments communiquant pour permettre le passage d'ammoniac entre eux. Une fois le système épuisé en ammoniac, le plus grand d'entre eux (généralement celui qui sert de réserve au plus petit) est remplacé.

La présente invention vise à fournir un réservoir pour le stockage d'ammoniac par sorption, qui est aisé à fabriquer, dont la forme peut facilement être adaptée à son environnement sur un véhicule et qui peut aisément être rechargé en ammoniac au lieu d'être remplacé au moins partiellement.

A cet effet, l'invention concerne un réservoir pour le stockage d'ammoniac par sorption, ledit réservoir comprenant des alvéoles communiquant entre elles et avec au moins un orifice communiquant avec l'extérieur, ces alvéoles étant aptes à contenir un solide destiné à la sorption d'ammoniac.

Par « réservoir », on entend désigner un récipient ou enceinte délimitant au moins un volume interne servant de contenant au solide. Selon l'invention, le réservoir comprend au moins une paroi délimitant des alvéoles c.à.d. des cavités susceptibles de contenir ledit solide. Ces cavités peuvent avoir une forme quelconque. De préférence, elles ont toutes la même forme.

Selon l'invention, le solide est destiné à la sorption (de préférence, à la chimisorption) d'ammoniac. La demande US susmentionnée décrit et liste de tels solides, et son contenu est à cet effet incorporé dans la présente demande. Il s'agit généralement de chlorures de métaux alcalins, alcalino-terreux ou de transition. Ces solides peuvent être à l'état pulvérulent ou sous forme d'agglomérats. De manière préférée, il y a un agglomérat par alvéole. La forme et la taille des alvéoles sont de préférence adaptées pour pouvoir épouser au moins une partie de la surface externe des agglomérats.

De préférence, les alvéoles sont en matière plastique. Les matières thermoplastiques donnent de bons résultats dans le cadre de l'invention, notamment en raison des avantages de poids, de résistance mécanique et chimique et de mise en oeuvre facilitée (ce qui permet justement d'obtenir des formes complexes).

En particulier, on peut utiliser des polyoléfines, des polyhalogénures de vinyle, des polyesters thermoplastiques, des polycétones, des polyamides, des polyphtalamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles, les fibres de verre et les fibres polymériques. Il est également possible d'utiliser des structures multicouches constituées de couches empilées et solidaires comprenant au moins un des polymères ou copolymères décrits supra.

D'excellents résultats ont été obtenus avec du polyphtalamide chargé en fibres de verre.

Les alvéoles du réservoir selon l'invention peuvent au moins en partie être réalisées d'un seul tenant, par exemple sous forme de plaque(s) injectées. De préférence, une plaque inférieure comprenant des segments de sinusoïdes est assemblée avec une plaque supérieure de forme bombée.

Des renforts latéraux sous forme de nervures peuvent être ajoutés afin d'améliorer la résistance mécanique des alvéoles.

Alternativement, les alvéoles peuvent être réalisées séparément (individuellement ou par groupes), par exemple par injection ou soufflage de matière plastique, puis assemblées par tout moyen connu, tel que par soudure par exemple. Cette variante permet de réaliser un assemblage non parallèle des alvéoles c.à.d. tel qu'avec des alvéoles de forme identique, au moins une des faces desdites alvéoles n'est pas parallèle à la face analogue de sa voisine.

La production de groupes d'alvéoles par injection est particulièrement avantageuse car elle permet notamment de réaliser de manière économique de très petites alvéoles. Or les alvéoles de petite taille permettent d'obtenir une bonne tenue de celles-ci à la (dé)pression interne, et permettent d'améliorer l'échange thermique entre les systèmes de chauffe et/ou de refroidissement et le réactif.

Selon l'invention, les alvéoles communiquent entre elles de sorte à assurer la circulation d'ammoniac tant lors du remplissage (recharge) du réservoir que lors de son utilisation (consommation ou décharge d'ammoniac). Cette communication est généralement assurée par au moins un orifice dans chaque alvéole et par un dispositif reliant ces orifices entre eux et vers au moins un orifice communiquant avec l'extérieur du réservoir, de sorte à permettre sa recharge et sa décharge en ammoniac.

Dans une variante, l'ensemble des alvéoles ou un sous-groupe d'entre elles est surmonté par un réseau de canalisations assurant la communication entre elles. Cette variante est particulièrement avantageuse dans le cas où les alvéoles sont réalisées à partir d'au moins une feuille/plaque soudée localement pour former les alvéoles. Dans cette variante, ledit réseau assure aussi généralement un rôle de renfort mécanique, augmentant la résistance mécanique et la résistance à la (dé)pression du réservoir. Dans cette variante, le réseau peut être libre mais de préférence, il est solidaire d'un couvercle recouvrant les alvéoles et jouant un rôle de renfort supplémentaire.

Dans une autre variante, éventuellement combinable avec la précédente, les alvéoles sont regroupées sous un couvercle commun, délimitant avec leur face supérieure, un volume creux et chaque alvéole comprend au moins un orifice communiquant avec ce volume, le couvercle comprenant au moins un orifice assurant la communication de ce volume avec l'extérieur du réservoir. Dans cette variante, le couvercle peut également avoir pour rôle d'assembler les alvéoles (de les rendre solidaires mécaniquement) et/ou de renforcer le réservoir.

De préférence, la forme des alvéoles (toutes ou partie d'entre elles) et/ou leur mode de réalisation et/ou d'assemblage est tel qu'au moins un élément actif du système (remplissant une fonction utile telle que chauffage, refroidissement ou renfort mécanique) puisse être inséré dans ou entre elles. Par exemple, un élément chauffant ou un matériau à changement de phase (MCP, ou matériau stockant ou restituant de la chaleur en changeant de phase selon la température qui l'environne) est avantageusement inséré dans ou entre les alvéoles.

L'usage d'éléments chauffants ou de matériaux à changement de phase permet de stabiliser la température du réactif contenu dans l'alvéole et d'assurer ainsi une production stable d'ammoniac. De plus, l'utilisation de chauffe différenciée entre alvéoles et/ou de quantités relatives différentes de matériaux à changement de phase entre alvéoles permet d'appauvrir ou d'enrichir certaines alvéoles en ammoniac; par exemple, lors d'un arrêt du système (suite par exemple à un arrêt du véhicule), la charge en ammoniac dans les alvéoles refroidissant plus vite (contenant par exemple peu ou pas de matériau à changement de phase) augmentera au détriment des alvéoles refroidissant plus lentement (contenant par exemple beaucoup de matériau à changement de phase). Ceci peut être particulièrement intéressant pour assurer une mise à disposition rapide d'ammoniac après un arrêt du véhicule, par exemple en activant à ce moment préférentiellement les alvéoles riches en ammoniac.

Les alvéoles peuvent également être traversées ou pénétrées, de préférence dans leur plus grande dimension, par un ou plusieurs canaux éventuellement obturés à l'une de leurs extrémités et qui permet également l'insertion d'un élément actif du système. Cette disposition est particulièrement favorable pour le positionnement de moyens de chauffe ou de refroidissement: les canaux étant placés substantiellement au centre du réactif permettent des échanges thermiques rapides. De plus, si le logement interne des canaux est séparé des réactifs par la paroi (en d'autres termes: si les canaux sont séparés de manière étanche du volume interne des alvéoles), les moyens de chauffe ou de refroidissement qui y sont positionnés ne doivent pas être attachés de manière étanche. Ceci permet en particulier de les démonter facilement, et de monter alternativement dans ces canaux des moyens de chauffe (lors de la désorption de l'ammoniac) ou de refroidissement (lors de l'absorption d'ammoniac).

De bons résultats ont été obtenus lorsque le nombre de canaux sur l'ensemble des alvéoles est supérieur à 1 canal par 4 litres de réactif; c'est tout particulièrement le cas lorsque ce nombre dépasse 1 par litre de réactif.

Les moyens de chauffe et/ou MCP, ainsi que les moyens de refroidissement peuvent être placés tant dans des canaux internes qu'à l'extérieur des alvéoles, voire même en ce qui concerne les MCP à l'intérieur des alvéoles, dans la chambre du réactif. Une combinaison particulièrement intéressante est de placer les moyens de chauffe dans des canaux tels que décrits précédemment et les MCP à l'extérieur des alvéoles, éventuellement surmontés de moyens d'isolation ; cette configuration permet en effet d'obtenir de bonnes performances dynamiques du système de chauffe: en cas de démarrage dans des conditions froides, la chaleur générée à l'intérieur des canaux est en effet très rapidement transmise au réactif, car l'enthalpie nécessaire à la chauffe des canaux est faible vu leurs petites dimensions et leurs faibles masses. Les MCP placés à l'extérieur des alvéoles ne se mettent à chauffer qu'après que le lit de réactif soit chauffé et permettent de récupérer la chaleur arrivant en périphérie et de stabiliser la température des réactifs et la pression d'ammoniac. Les MCP placés à l'extérieur jouent de plus un effet isolant, complémentaire à celui joué par les isolants qui peuvent être placés en couche externe au-dessus des MCP.

Dans une variante particulièrement intéressante de l'invention, le réservoir comprend un MCP dans au moins une partie des alvéoles et/ou entre au moins une partie d'entre elles et/ou dans un canal isolant d'au moins une partie d'entre elles.

Les parois des alvéoles peuvent être munies de nervures internes permettant un bon passage des gaz entre les réactifs et les parois. Ce passage permet également de limiter les pertes de chaleur vers l'extérieur du dispositif.

Dans une variante de l'invention, le réservoir présente au moins une entrée permettant le remplissage d'ammoniac, à partir d'une bonbonne par exemple. Il peut également présenter une sortie, permettant un remplissage sous balayage d'ammoniac éventuellement dilué. Si nécessaire, le réservoir peut être purgé de l'ammoniac en tirant sous vide, ou sous l'effet d'un flux gazeux.

La présente invention concerne également un réservoir tel que décrit ci-dessus et contenant le solide tel que décrit ci-dessus. Elle concerne également un tel réservoir comprenant en outre au moins un élément actif tel que décrit ci-dessus.

Enfin, la présente invention concerne également un procédé pour le stockage d'ammoniac utilisant un réservoir tel que décrit ci-dessus.

L'invention est illustrée de manière non limitative par les figures 1 à 3 en annexe, qui en illustrent de manière schématique:
- Fig. 1: une vue du dessus d'un réservoir selon une 1^{ère} variante de l'invention
- Fig. 2: une vue en coupe par un plan vertical d'un réservoir selon une 2^{ème} variante de l'invention
- Fig. 3: deux vues en coupe selon des plans verticaux perpendiculaires entre eux, d'un réservoir selon une 3^{ème} variante de l'invention.

Dans ces figures, des n° identiques désignent des éléments identiques ou similaires.

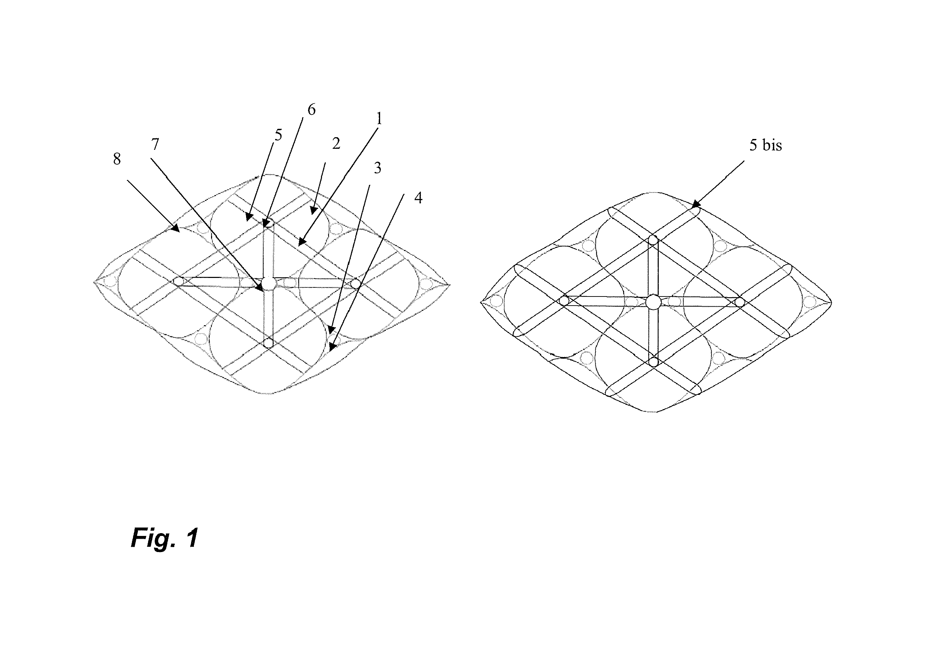

La figure 1 illustre un réservoir partitionné en alvéoles (1) de sections identiques. Les alvéoles sont dimensionnées de manière à ce que des réactifs (non représentés) puissent y être insérés. Les parois (2) des alvéoles sont profilées de façon à présenter une bonne résistance à la génération de pression et à la mise sous vide. Dans l'exemple représenté, les parois sont constituées de segments de sinusoïdes. Les interstices (3) entre les alvéoles présentent des évidements (4) qui communiquent avec l'environnement extérieur et sont mis à profit pour l'insertion d'éléments chauffants ou de refroidissement. Ils constituent un réseau d'échange de chaleur.

Un couvercle de forme bombée (non représenté) est fixé au dessus des alvéoles; il comprend un réseau de canalisations (5) qui viennent renforcer la structure de l'ensemble. Ces canalisations communiquent avec l'intérieur des alvéoles par des orifices (6). Le couvercle est assemblé de manière totalement étanche sur la périphérie externe du réservoir. L'assemblage entre le couvercle et les parois des alvéoles internes au réservoir peut être réalisé de manière partiellement ou totalement étanche.

Le couvercle présente au moins une entrée (7) permettant le remplissage d'ammoniac, à partir d'une bonbonne par exemple.

Dans une variante de cet exemple, le réservoir peut présenter une sortie, permettant un remplissage sous balayage d'ammoniac éventuellement dilué. Si nécessaire, le réservoir peut être purgé de l'ammoniac en tirant sous vide, ou sous l'effet d'un flux gazeux.

Des chambres secondaires (8), disposées latéralement dans cet exemple, permettent de renforcer la structure. Elles peuvent être remplies de matériaux à changement de phase dont l'objectif est de faciliter la gestion thermique du système.

A noter que les canalisations (5) du couvercle peuvent se prolonger par des canalisations (5 bis) sur les faces latérales des alvéoles et rejoindre des canalisations similaires dans le fond du réservoir, assurant ainsi un renfort supplémentaire (voir version de droite de la Fig. 1).

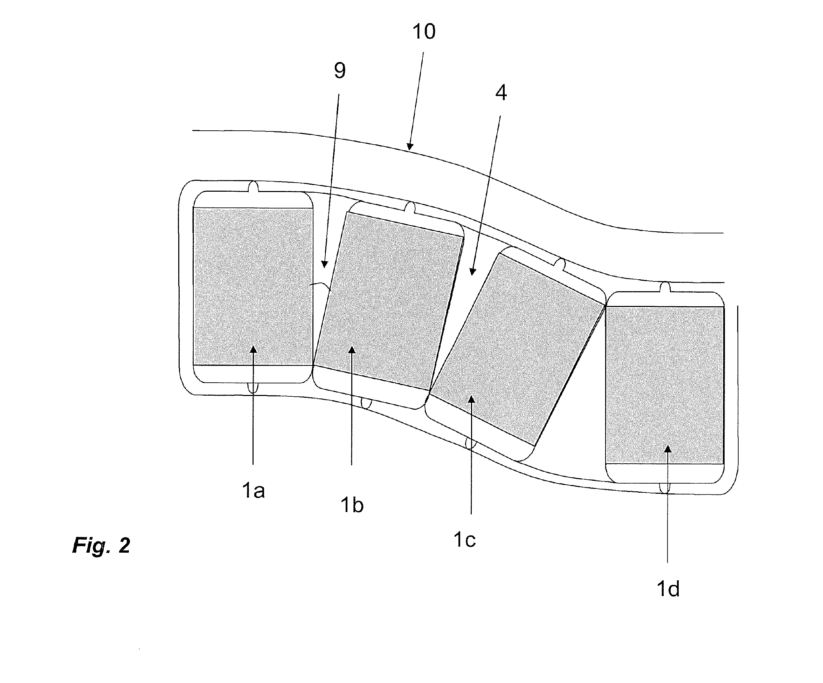

La figure 2 illustre une disposition des alvéoles (cette fois-ci représentées avec leur contenant solide) offrant une plus grande flexibilité de forme au réservoir. Les alvéoles (1a), (1b), (1c), (1d) sont décalées d'un angle (α) (9) ce qui permet de profiler le réservoir suivant la courbe (10).

L'angle α peut être variable d'une alvéole à l'autre, résultant en des orientations relatives différentes des alvéoles. Les volumes (4) inter alvéoles peuvent être garnis de matériaux à changement de phase. Ils peuvent aussi servir à la mise en place de systèmes de réchauffage et de refroidissement. Ces volumes peuvent également présenter (un emplacement pour) des éléments de renfort de la structure du réservoir.

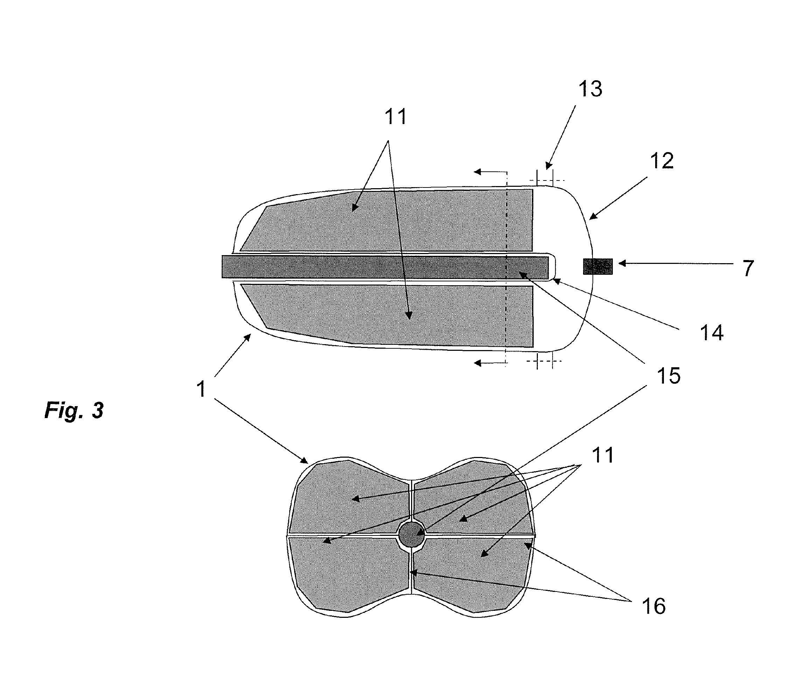

La figure 3 montre (en deux coupes selon des plans verticaux perpendiculaires entre eux) une autre possibilité de partitionnement des réactifs (11), dans un réservoir injecté en deux ou plusieurs pièces (4 alvéoles (1) réalisées séparément en fait). Un matériau pre-preg (fibres composites pré-imprégnées) peut être utilisé pour la fabrication du réservoir.

Après assemblage des quatre alvéoles (1) comprenant le solide saturé en ammoniac (11), le réservoir est fermé de manière étanche avec un couvercle (12) maintenu par une bride (13). Le couvercle (12) est équipé d'un orifice entré/sortie (7) pour le débit d'ammoniac. Le réservoir comprend un profilé creux (14) inséré entre les alvéoles (1) et qui sert de logement à un élément chauffant (15), qui est ainsi à l'extérieur de l'enveloppe. Le réservoir est renforcé par des parois et nervures internes (16) qui peuvent être munies d'ailettes thermiquement conductrices. Des nervures de renfort peuvent être également disposées sur l'enveloppe externe.

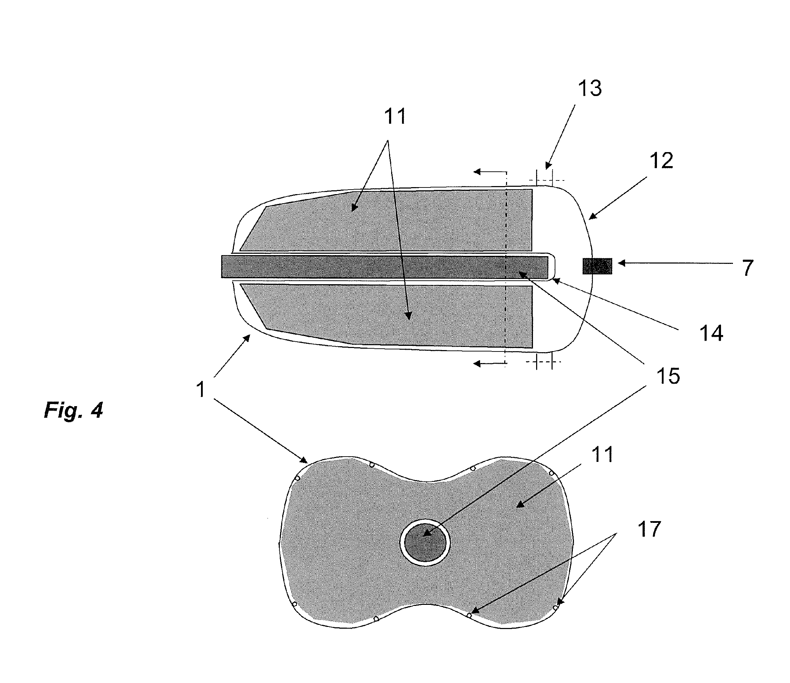

La figure 4 montre (en deux coupes selon des plans verticaux perpendiculaires entre eux) une alvéole (1) moulée par injection comportant un canal creux (14) permettant de loger un élément chauffant (15). Lors de la recharge en ammoniac, l'élément chauffant (15) peut être aisément extrait et remplacé par un élément réfrigérant (en vue de favoriser l'adsorption de l'ammoniac), vu que ces éléments ne sont pas fixés de manière étanche sur la paroi de l'alvéole (1). La paroi interne de l'alvéole (1) est munie de nervures (17) favorisant le passage des gaz entre la paroi et le réactif (11) ; ce passage limite également les déperditions calorifiques vers l'extérieur de l'alvéole (1).

Le réservoir peut être entouré par une double paroi (non représentée) créant un volume pouvant jouer le rôle d'échangeur thermique. Ce volume peut également être rempli par un matériau à changement de phase.

## Revendications

1. Réservoir pour le stockage d'ammoniac par sorption, ledit réservoir comprenant des alvéoles communiquant entre elles et avec au moins un orifice communiquant avec l'extérieur, ces alvéoles étant aptes à contenir un solide destiné à la sorption d'ammoniac.

2. Réservoir selon la revendication précédente, dans lequel les alvéoles ont toutes la même forme.

3. Réservoir selon l'une quelconque des revendications précédentes, dans lequel les alvéoles sont au moins en partie réalisées d'un seul tenant par injection de matière plastique.

4. Réservoir selon la revendication 1 ou 2, dans lequel les alvéoles sont réalisées séparément (individuellement ou par groupes), par injection ou soufflage de matière plastique, puis assemblées.

5. Réservoir selon l'une quelconque des revendications précédentes, dans lequel au moins une partie des alvéoles sont surmontées par un réseau de canalisations assurant la communication entre elles.

6. Réservoir selon l'une quelconque des revendications précédentes, dans lequel les alvéoles sont regroupées sous un couvercle commun, délimitant avec leur face supérieure, un volume creux et dans lequel chaque alvéole comprend au moins un orifice communiquant avec ce volume, le couvercle comprenant au moins un orifice assurant la communication de ce volume avec l'extérieur du réservoir.

7. Réservoir selon l'une quelconque des revendications précédentes, dans lequel la forme d'au moins une partie des alvéoles et/ou leur mode de réalisation et/ou d'assemblage est tel qu'au moins un élément actif du système puisse être inséré dans ou entre elles.

8. Réservoir selon la revendication précédente, dans lequel certaines alvéoles sont pourvues d'un ou de plusieurs canaux permettant de loger au moins un élément actif du système.

9. Réservoir selon la revendication précédente, dans lequel les canaux sont séparés de manière étanche du volume interne des alvéoles.

10. Réservoir selon l'une quelconque des revendications 7 à 9, dans lequel l'élément actif est un élément chauffant, un matériau à changement de phase ou un élément réfrigérant.

11. Réservoir selon l'une quelconque des revendications 7 à 10, comprenant un matériau à changement de phase dans au moins une partie des alvéoles et/ou entre au moins une partie d'entre elles et/ou dans un canal isolant d'au moins une partie d'entre elles.

12. Réservoir selon l'une quelconque des revendications précédentes, dans lequel la paroi interne des alvéoles est munie de nervures.

13. Réservoir selon l'une quelconque des revendications précédentes, comprenant au moins une entrée et une sortie.

14. Réservoir selon l'une quelconque des revendications précédentes, dans lequel les alvéoles comprennent un solide destiné à la sorption d'ammoniac.

15. Réservoir selon la revendication précédente, dans lequel le solide est un chlorure de métal alcalin, alcalino-terreux ou de transition.
